# EUROPEAN PATENT APPLICATION

(11) **EP 3 643 900 A1**
(43) Date of publication of application: **29.04.2020**
(21) Application number: 18202380.4
(22) Date of filing: 24.10.2018
(51) Int. Cl.: F02B 23/06, F02F 1/00, F02F 3/26

(54) **A PISTON FOR A COMPRESSION IGNITION INTERNAL COMBUSTION ENGINE**

(71) Applicant: C.R.F. Società Consortile per Azioni, 10043 Orbassano (Torino) (IT)
(72) Inventor: BUSCEMA, Mr. Massimo, I-10043 Orbassano (Torino) (IT); ROSSI, Mr. Dario, I-10043 Orbassano (Torino) (IT); RUSTICI, Mr. Giorgio, I-10043 Orbassano (Torino) (IT); SARETTO, Mr. Roberto, I-10043 Orbassano (Torino) (IT)
(74) Representative: De Bonis, Paolo

(57) **Abstract**

Described herein is a piston (1) for a compression-ignition internal-combustion engine, comprising:
- a longitudinal axis (X1);
- a skirt (2);
- a crown (4); and
- a bowl (BW) made in said crown (4),
wherein said bowl (BW) comprises an upper region (V1) and a lower region (V2), the volume of said upper region (V1) being comprised between 35% and 37% of the total volume of said bowl (BW), and the volume of the lower region (V2) being comprised between 65% and 63% of the total volume of said bowl (BW).

## Description

### Field of the invention

The present invention relates to pistons for internal-combustion engines, in particular pistons for compression-ignition engines. In greater detail, the present invention has been developed with particular reference to pistons for low-emission compression-ignition engines, comprising a stepped bowl.

### Prior art and general technical problem

The by now increasingly stringent standards in regard to the reduction of pollutant emissions of vehicles equipped with compression-ignition engines impose on motor-vehicle technicians the need to seek margins of reduction of emissions also in the design of the pistons that equip the engine.

Among the measures implemented for meeting the requisites imposed by current standards is the profiling of the bowl in the crown of the piston to form two distinct regions, each having a respective aspect ratio and aimed at promoting the development of a corresponding flame front.

In greater detail, bowls of some pistons of a known type for compression-ignition engines are shaped so as to create a functional partitioning into a lower region and an upper region.

The lower region has a traditional omega-shaped cross section (the so-called re-entrant bowl), which hence includes a substantially toroidal development about a central relief. The upper region has, instead, a substantially lenticular shape, markedly more flattened in the direction of the axis of the piston as compared to the lower region, and at the same time more extensive in the diametral direction. The entrance is moreover intrinsically open, especially if compared with the entrance of the lower region, and promotes the development of a flame front with ample availability of combustion air. From certain standpoints, the combustion that develops in the upper region has optimal features in terms of efficiency, especially if compared with the combustion that takes place in the lower region, which is, instead, to a certain extent shielded in regard to ingestion of further combustion air precisely by the flame front that propagates in the upper region. In the lower region, mixing is primarily ensured by the organized turbulent motions in the combustion chamber (swirl above all).

The upper region is operatively separated from the lower region by a radially projecting circular rim that also functions as jet deflector and divider. The two levels into which the jet of fuel is deflected are directed separately towards the two, upper and lower, regions for supplying the respective flame fronts.

The reason for this division is substantially functional: even though it would be desirable to shape the bowl in a way similar to the upper region, this would involve a sensible reduction of the resistant section of the crown of the piston, with consequent high risk of failure of the crown at the periphery thereof, in particular around the annulus at the periphery of the bowl when the crown is subjected to the pressures inside the combustion chamber.

In this way, the sizing of the upper region of the bowl is substantially a compromise between the requirements of efficiency of combustion and those of structural strength. The "share" - so to say - of combustion that cannot be accommodated in the upper region is hence accommodated in the lower region, which has the conventional omega profile.

Unfortunately, the nature of compromise that characterizes the design of pistons of a known type inevitably reflects upon the performance of the piston itself: at times the performance is too unbalanced in favour of one of the requirements, and at other times it is decidedly insufficient as regards both requirements.

### Object of the invention

The object of the present invention is to solve the technical problems mentioned previously. In particular, the object of the invention is to provide a piston for a compression-ignition internal-combustion engine that will be optimal both from the standpoint of efficiency of combustion and from the standpoint of structural strength, and not least also from the standpoint of the general efficiency and performance of the engine unit on which the piston is installed.

### Summary of the invention

The object of the present invention is achieved by a piston having the features forming the subject of the ensuing claims, which form an integral part of the technical disclosure provided herein in relation to the invention.

### Brief description of the figures

The invention will now be described with reference to the annexed figures, which are provided purely by way of non-limiting example and in which:
- Figure 1 is a schematic view of a bowl profile of a piston according to the invention;
- Figure 1A is an enlargement of the portion enclosed in the box A of Figure 1; and
- Figure 2 and Figure 3 are two schematic cross sections of the bowl of the piston of Figure 1, which further illustrate some notable geometrical parameters thereof.

### Detailed description

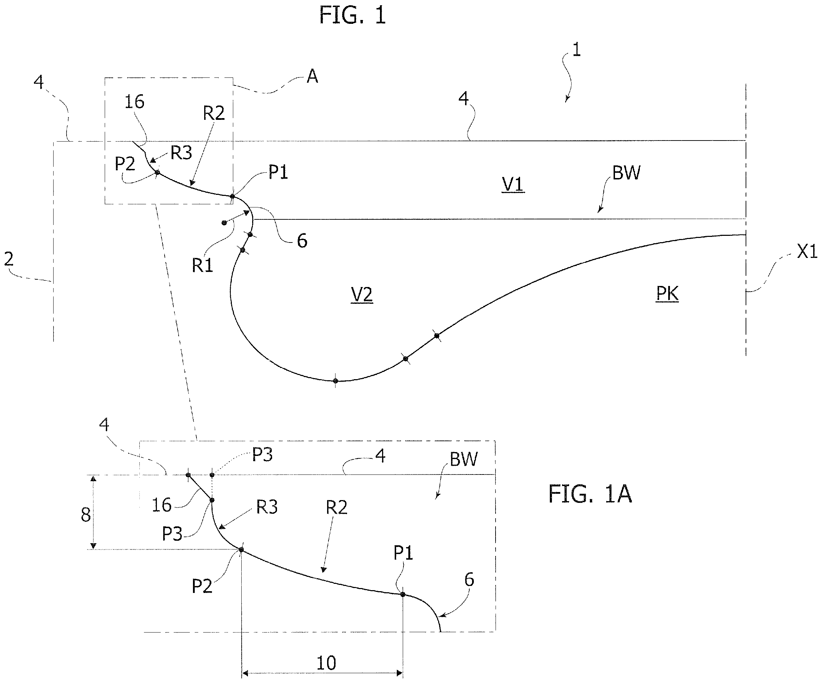

The reference number 1 in Figure 1 designates as a whole a piston according to the invention. The piston 1 comprises a skirt 2, including one or more peripheral cylindrical surfaces of the piston, which are designed to slide relative to a cylinder liner of an internal-combustion engine block into which the piston is installed, and a crown 4 constituting a top surface of the piston directly facing the combustion chamber. The piston 1 has a longitudinal axis X1.

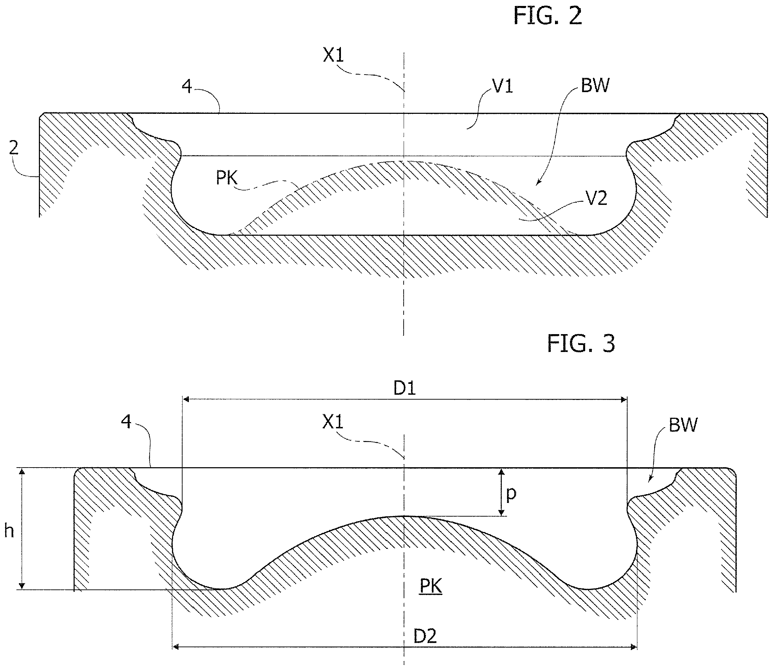

Provided in the crown 4 is a bowl BW comprising an upper region V1 and a lower region V2 (c.f. also Figure 2) .

The lower region V2 has an omega-shaped cross section (the so-called re-entrant bowl), which hence includes a substantially toroidal development about a central relief PK, here having a "muffin-like" shape. The bowl BW, like the regions V1 and V2, is here schematically represented as having a geometry axisymmetrical with respect to the axis X1, but in various embodiments the axial symmetry may be interrupted by geometrical singularities, such as seats for accommodating the lift of the intake and exhaust valves in the proximity of the top dead centre.

The upper region V1 has, instead, a substantially lenticular shape, markedly more flattened in the direction of the axis X1 of the piston than the lower region, and at the same time more extensive in a diametral direction.

The upper region V1 is operatively separated from the lower region V2 by a circular rim 6 radially projecting towards the inside of the bowl BW, which also functions as jet deflector and divider. The circular rim 6 has a convex surface with curvature in a radial plane having a radius R1, which is preferably uniform. The radius R1 is at least 1.45 mm, preferably at least 1.5 mm.

The two fronts in which the circular rim 6 deflects the jet of fuel that penetrates into the combustion chamber are directed separately towards the two regions, the top one V1 and the bottom one V2 for supplying the respective flame fronts, as already described in relation to the prior art.

The surface of separation between the regions V1 and V2 is a plane orthogonal to the axis X1 and passing through the circumference given by the intersection of a circular cylindrical surface having axis X1 with the convex surface of the circular rim 6. In the embodiment represented in the figures, this circumference also identifies a minimum diameter of the bowl BW, designated by the reference D1 in Figure 3.

According to the invention, the volume of the region V1 is comprised between 35% and 37% of the total volume of the bowl BW, whereas, in a dual way, the volume of the lower region V2 is comprised between 65% and 63% of the total volume of the bowl BW. The sum of the volumes of the regions V1 and V2 is equal to the total volume of the bowl BW.

With reference to Figures 1 and 1A, provided between the entrance of the bowl BW (corresponding to the interface between the crown 4 of the piston 1 and the region V1, and located precisely on the crown 4) and the circular rim 6 are a step 8 and an annular surface 10 adjacent to one another, where the former is in a position radially further out than the latter.

The concave annular surface 10, the concavity of which is understood as being towards the inside of the bowl BW, is characterized by a curvature in a radial plane having a radius R2 smaller than or equal to 19 mm for cubic capacities comprised between 1500 cc and 2500 cc. More in general, the radius 19 is typically comprised between 15 mm and 19 mm.

The step 8 is preferably radiused to the concave annular surface 10 via a bottom radiusing characterized by a radius R3 of at least 1 mm.

On the basis of the indications provided above, it is hence possible to identify some notable points in the profile of the bowl BW (in the circular development about the axis X1, they give rise to concentric circumferences centred on the axis X1). These points are indicated in Figures 1 and 1A as:
- point P1, which is a point of connection between the convex surface of the circular rim 6 and the radially innermost end of the concave annular surface 10;
- point P2, which is a point of connection between the radially outermost end of the concave annular surface 10 and the radially innermost end of the step 8, in particular of the bottom radiusing with radius R3; and
- point P3, which a point of intersection between the crown of the piston 4 and the bottom radiusing, or else a point of intersection between a chamfer 16 possibly made at the entrance of the bowl BW and the bottom radiusing.

Moreover preferable, according to the invention, are the following conditions at the points P1 and P2:
i) the convex surface of the circular rim 6 and the surface of the inclined portion 14 are tangential at the point P1; and
ii) the concave annular surface 10 and the surface of the bottom radiusing of the step 8 are tangential at the point P2.

With reference to Figures 2 and 3, given the profile of the bowl BW it is possible to identify further notable parameters for which some specific relations are specified according to the invention.

With reference to Figure 3, D1 is the diameter at the interface between the upper region V1 and the lower region V2 of the bowl BW, which, as already described, is referred to a circumference given by the intersection of a circular cylindrical surface having axis X1 with the convex surface of the circular rim 6. The diameter D1, in the embodiment represented in the figures, identifies a minimum diameter of the bowl BW.

Moreover D2 is the maximum diameter of the lower region V2 of the bowl BW, whereas denoted by h and p are, respectively:
- the maximum depth of the bowl BW (at the bottom of the region V2) with respect to the crown 4 along the axis X1; and
- the depth of the bowl BW at the relief PK on the axis X1 (namely, the axial distance between the top of the relief PK and the crown 4 of the piston).

Moreover denoted by B is the diameter of the skirt 2 of the piston 1 (corresponding, but for the operating play, to the bore of the cylinder in which the piston 1 operates), and by S is a stroke of the piston 1 in the reciprocating motion within the respective cylinder of the engine unit on which it is installed.

There hence apply, according to the invention, one or more, preferably all, of the following relations:
- a ratio D1/B is comprised between 62.5% and 65% (extremes included);
- a ratio D2/D1 is comprised between 100% and 105% (extremes included);
- a ratio p/h is comprised between 43% and 48% (extremes included); and
- a ratio h/D1 is equal to K(S/B), where K is a numeric coefficient comprised between 21 and 22, and preferably 21.5.

A piston 1 built according to the invention enables an optimal compromise between the requisites of combustion efficiency, structural strength, reduction of pollutant emissions, and performance of the engine. The volumetric division between the regions V1 and V2 (not very far from being even), as likewise the sizing in accordance with the parameters described above, free the piston 1 from the dictates typical of the compromise solution.

The profile of the annular surface 10 of the bowl BW in the region V1 gives rise to a region V1 that is more widened in the radial direction than the region V2, increasing the amount of combustion air available for the flame front that originates from the fraction of jet of fuel deflected towards the region V1.

The step 8 confines the flame front that develops in the region V1 to the region V1 itself, where it can evolve, also sustained by the intense squish motion generated by the reciprocating movement of the piston. If the step 8 were not present, there would be the risk of encroachment of the flame front towards the radially outermost areas of the piston 1, with consequent impact of the flame front against the wall. This is not desirable since it would create dirt and soiling both of the cylinder liner and of the piston 1 itself.

Of course, the details of construction and the embodiments may vary widely with respect to what has been described and illustrated herein, without thereby departing from the scope of the present invention as defined by the annexed claims.

## Claims

1. A piston (1) for a compression-ignition internal-combustion engine, comprising:
- a longitudinal axis (X1);
- a skirt (2);
- a crown (4); and
- a bowl (BW) provided in said crown (4),
wherein said bowl (BW) comprises an upper region (V1) and a lower region (V2), the volume of said upper region (V1) being comprised between 35% and 37% of the total volume of said bowl (BW), and the volume of the lower region (V2) being comprised between 65% and 53% of the total volume of said bowl (BW).

2. The piston (1) according to Claim 1, wherein said lower region (V2) has a substantially omega-shaped cross section, and wherein said upper region (V1) has a substantially lenticular geometry, said upper region and lower region having an interface at a circular rim (6) projecting radially towards the inside of said bowl (BW) .

3. The piston (1) according to Claim 2, wherein said circular rim (6) has a convex surface with curvature in a radial plane.

4. The piston (1) according to Claim 3, wherein the curvature of the convex surface of said circular rim (6) has a radius of curvature (R1) of at least 1.45 mm, preferably at least 1.5 mm.

5. The piston (1) according to any one of the preceding claims, wherein moreover, named:
- D1 a diameter at the interface between the upper region (V1) and the lower region (V2) of the bowl (BW),
- D2 a maximum diameter of the lower region (V2) of the bowl (BW), and
- B a diameter of the skirt (2) of the piston (1),
at least one of the following applies:
- a ratio D1/B is comprised between 62.5% and 65%; and
- a ratio D2/D1 is comprised between 100% and 105%.

6. The piston (1) according to Claim 5, wherein the diameter D1 at the interface between the upper region (V1) and the lower region (V2) of the bowl (BW) is referred to a circumference given by the intersection between a circular cylindrical surface having an axis that coincided with the longitudinal axis (X1) of the piston and the convex surface of the circular rim (6).

7. The piston (1) according to Claim 6, wherein the diameter D1 is a minimum diameter of the bowl (BW).

8. The piston (1) according to any one of Claims 5 to 7, wherein, named:
- h the maximum depth of the bowl (BW) with respect to the crown (4) of the piston (1) along the longitudinal axis (X1),
- p the depth of the bowl (BW) at a central relief (PK) of the lower region (V2) in a point corresponding to the longitudinal axis (X1) of the piston (1),
- S a stroke of the piston (1) in a cylinder of an internal-combustion engine equipped with the piston (1) itself, and
- K a numeric coefficient comprised between 21 and 22, preferably 21.5,
at least one of the following applies:
- a ratio p/h is comprised between 43% and 48%; and
- a ratio h/D1 is equal to K(S/B).

9. The piston (1) according to any one of Claims 2 to 8, wherein provided between an entrance of the bowl (BW) and the circular rim (6) are a step (8) and a concave annular surface (10) adjacent to one another, and where the step (8) is in a position radially further out than the concave annular surface (10).

10. The piston (1) according to Claim 9, wherein the concave portion (12) has a curvature in a radial plane having a radius (R2) comprised between 15 mm and 19 mm.

11. The piston (1) according to Claim 9 or Claim 10, wherein the step (8) is radiused to the concave annular surface (10) via a bottom radiusing having a radius (R3) of at least 1 mm.

12. The piston (1) according to any one of Claims 9 to 11, wherein, named:
- P1 a point of connection between the convex surface of the circular rim (6) and the radially innermost end of the concave annular surface (10),
- P2 a point of connection between the radially outermost end of the concave annular surface (10) and the radially innermost end of the step (8), in particular of the bottom radiusing, and
- P3 a point of intersection between the crown (4) of the piston (1) and the bottom radiusing,
the following apply:
i) the convex surface of the circular rim (6) and the concave annular surface (10) are tangential at the point P1; and
ii) the concave annular surface (10) and the surface of the bottom radiusing of the step (8) are tangential at the point P2.

13. The piston (1) according to Claim 12, wherein said bowl (BW) has a chamfer (16) at an entrance, where the point P3 is a point of intersection between said chamfer (16) and the bottom radiusing.

14. A compression-ignition internal-combustion engine comprising a piston (1) according to any one of the preceding claims.

## Amended claims

### Amended claims in accordance with Rule 137(2) EPC.

1. A piston (1) for a compression-ignition internal-combustion engine, comprising:
- a longitudinal axis (X1);
- a skirt (2);
- a crown (4); and
- a bowl (BW) provided in said crown (4),
wherein said bowl (BW) comprises an upper region (V1) and a lower region (V2), the volume of said upper region (V1) being comprised between 35% and 37% of the total volume of said bowl (BW), and the volume of the lower region (V2) being comprised between 65% and 63% of the total volume of said bowl (BW),
wherein the surface of separation between the upper region (V1) and the lower region (V2) is a plane orthogonal to the longitudinal axis (X1) and passing through a circumference identifying a minimum diameter (D1) of the bowl (BW).

2. The piston (1) according to Claim 1, wherein said lower region (V2) has a substantially omega-shaped cross section, and wherein said upper region (V1) has a substantially lenticular geometry, said upper region and lower region having an interface at a circular rim (6) projecting radially towards the inside of said bowl (BW) .

3. The piston (1) according to Claim 2, wherein said circular rim (6) has a convex surface with curvature in a radial plane.

4. The piston (1) according to Claim 3, wherein the curvature of the convex surface of said circular rim (6) has a radius of curvature (R1) of at least 1.45 mm, preferably at least 1.5 mm.

5. The piston (1) according to any one of the preceding claims, wherein moreover, named:
- D1 a diameter at the interface between the upper region (V1) and the lower region (V2) of the bowl (BW),
- D2 a maximum diameter of the lower region (V2) of the bowl (BW), and
- B a diameter of the skirt (2) of the piston (1), at least one of the following applies:
- a ratio D1/B is comprised between 62.5% and 65%; and
- a ratio D2/D1 is comprised between 100% and 105%.

6. The piston (1) according to Claim 5, wherein the diameter D1 at the interface between the upper region (V1) and the lower region (V2) of the bowl (BW) is referred to a circumference given by the intersection between a circular cylindrical surface having an axis that coincided with the longitudinal axis (X1) of the piston and the convex surface of the circular rim (6).

7. The piston (1) according to Claim 6, wherein the diameter D1 is the minimum diameter of the bowl (BW) .

8. The piston (1) according to any one of Claims 5 to 7, wherein, named:
- h the maximum depth of the bowl (BW) with respect to the crown (4) of the piston (1) along the longitudinal axis (X1),
- p the depth of the bowl (BW) at a central relief (PK) of the lower region (V2) in a point corresponding to the longitudinal axis (X1) of the piston (1),
a ratio p/h is comprised between 43% and 48%.

9. The piston (1) according to any one of Claims 2 to 8, wherein provided between an entrance of the bowl (BW) and the circular rim (6) are a step (8) and a concave annular surface (10) adjacent to one another, and where the step (8) is in a position radially further out than the concave annular surface (10).

10. The piston (1) according to Claim 9, wherein the concave portion (12) has a curvature in a radial plane having a radius (R2) comprised between 15 mm and 19 mm.

11. The piston (1) according to Claim 9 or Claim 10, wherein the step (8) is radiused to the concave annular surface (10) via a bottom radiusing having a radius (R3) of at least 1 mm.

12. The piston (1) according to any one of Claims 9 to 11, wherein, named:
- P1 a point of connection between the convex surface of the circular rim (6) and the radially innermost end of the concave annular surface (10),
- P2 a point of connection between the radially outermost end of the concave annular surface (10) and the radially innermost end of the step (8), in particular of the bottom radiusing, and
- P3 a point of intersection between the crown (4) of the piston (1) and the bottom radiusing,
the following apply:
i) the convex surface of the circular rim (6) and the concave annular surface (10) are tangential at the point P1; and
ii) the concave annular surface (10) and the surface of the bottom radiusing of the step (8) are tangential at the point P2.

13. The piston (1) according to Claim 12, wherein said bowl (BW) has a chamfer (16) at an entrance, where the point P3 is a point of intersection between said chamfer (16) and the bottom radiusing.

14. A compression-ignition internal-combustion engine comprising a piston (1) according to any one of the preceding claims.
